# EUROPÄISCHE PATENTSCHRIFT

(11) **EP 3 074 642 B1**
(45) Veröffentlichungstag und Bekanntmachung des Hinweises auf die Patenterteilung: **11.09.2019**
(21) Anmeldenummer: 14796045.4
(22) Anmeldetag: 06.11.2014
(51) Int. Cl.: F16B 5/02, F16B 29/00, F16B 35/06

(54) **BAUGRUPPE ZUR VERBINDUNG VON WENIGSTENS ZWEI BAUTEILEN MITTELS EINER SCHRAUBVERBINDUNG**
ASSEMBLY FOR CONNECTING AT LEAST TWO COMPONENTS USING A SCREW CONNECTION
ENSEMBLE PERMETTANT D'ASSEMBLER AU MOINS DEUX PIÈCES AU MOYEN D'UN ASSEMBLAGE PAR VIS

(30) Priorität: 29.11.2013 DE 102013224550
(43) Veröffentlichungstag der Anmeldung: 05.10.2016
(73) Patentinhaber: Bayerische Motoren Werke Aktiengesellschaft, 80809 München (DE)
(72) Erfinder: STANGL, Matthias, 85221 Dachau (DE)
(86) Internationale Anmeldenummer: PCT/EP2014/073912
(87) Internationale Veröffentlichungsnummer: WO 2015/078677

(56) Entgegenhaltungen:
- EP-A1- 1 900 619
- EP-A2- 1 512 616
- US-A- 759 834
- US-A- 2 941 286
- US-B1- 6 405 425

## Beschreibung

Die Erfindung betrifft eine Baugruppe zur Verbindung von wenigstens zwei Bauteilen mittels einer Schraubverbindung nach dem Oberbegriff des Anspruch 1, insbesondere zur Verbindung einer Fahrzeugkarosserie mit einem Fahrwerk oder von Fahrwerksteilen untereinander.

Verbindungen des Fahrwerks mit der Karosserie müssen quer zur Schraubenachse hohe Kräfte aufnehmen können, was über den Reibschluss zwischen den Bauteilen und durch Krafteinleitung über den Schraubenkopf geschieht. Hierzu sind große Schraubendimensionen und hohe Anzugskräfte der Schraube notwendig. Die Verwendung großer Schrauben erhöht jedoch den Platzbedarf für die Verschraubung sowie das Gewicht der Baugruppe und erschwert aufgrund der Schraubengröße auch die Montage.

Die gattungsgemäße US 2,941,286 zeigt eine Baugruppe mit einer Schraube, mit einem Schraubenkopf mit einer sich verjüngenden Außenkontur, deren Schraubenschaft ein Bauteil mit einer Vertiefung durchgreift, und einem zweiten Bauteil mit einer Öffnung, wobei beim Anziehen der Schraube ein Umformabschnitt um die Öffnung durch den Schraubenkopf verformt und ein seitlicher Formschluss zwischen den Bauteilen gebildet wird.

Die EP 1 900 619 A1, die US 759,834 und die US 6,405,425 B1 zeigen weitere Baugruppen zum Verbinden zweier Bauteile.

Die EP 1 512 616 A2 offenbart eine Verbindung einer Seitenverkleidung eines Traktors an einer an einem Fahrzeugrahmen angeordneten Trägerstruktur.

Es ist daher Aufgabe der Erfindung, eine derartige Baugruppe zu optmieren.

Diese Aufgabe wird erfindungsgemäß mit einer Baugruppe mit den Merkmalen des Anspruchs 1 gelöst. Der auf diese Weise hergestellte Formschluss zwischen den Bauteilen erleichtert die Aufnahme von Querkräften und sorgt für eine deutliche Erhöhung der Reibungskräfte zwischen den Bauteilen. Da die radialen Haltekräfte nicht mehr nur über die axiale Anpresskraft der Schraube aufgebracht werden müssen, weil ein radial wirkender Formschluss erreicht wird, kann die axiale Anpresskraft, die von der Schraube ausgeht, reduziert werden. Somit können leichtere und kleinere Schrauben als bisher eingesetzt werden, sodass sich Gewicht und Bauraum reduzieren lassen. Hierdurch wird auch die Montage vereinfacht.

Das erste zu verbindende Bauteil ist ein Karosseriebauteil und das zweite zu verbindende BauteilTeil einer Strebe des Fahrwerks.

Besonders vorteilhaft ist es, wenn das erste und das zweite zu verbindende Bauteil durch die Schraubverbindung insbesondere quer zur Schraubenachse spielfrei gehalten sind. Die spielfreie Verbindung kann sich auf natürliche Art und Weise durch die Verformung des Umformabschnitts des zweiten zu verbindenden Bauteils zum Ringvorsprung ergeben, der sich zwischen die Außenkontur des Schraubenkopfes und die Innenkontur des Verbindungsabschnitts im ersten zu verbindenden Bautel legt.

Die Verformung des Umformabschnitts erfolgt vorzugsweise plastisch, sodass der einmal ausgebildete Ringvorsprung am zweiten zu verbindenden Bauteil erhalten bleibt, was bei einem eventuellen Lösen und erneutem Herstellen der Schraubverbindung beispielsweise zu Reparaturzwecken erneut eine spielfreie, passgenaue Verbindung ergibt, die hohen Querkräften standhält.

Die Außenkontur des Schraubenkopfs ist im Kontaktbereich mit dem zweiten Bauteil bevorzugt wenigstens abschnittsweise trichterförmig. Eine mögliche spezielle Trichterform ist die Kegelform. Weitere günstige Außenkonturen ergeben sich durch Rotationsflächen, die durch eine gekrümmte Erzeugende definiert sind. Besonders bevorzugt ist die Erzeugende ein zur Schraubenachse gekrümmter Bogen, sodass sich entlang der Schraubenachse betrachtet ein nach innen zur Schraubenachse hin gekrümmter, im Querschnitt konkaver Verlauf der Außenkontur des Schraubenkopfs ergibt. Die Krümmung kann beispielsweise einem Kreisbogen folgen, sich aber auch zum Schraubenkopf und/oder zum Schraubenschaft hin vergrößern. Auch das Vorsehen von wechselnden Krümmungen und sogar von Vorsprüngen kann bei bestimmten Gegebenheiten von Vorteil sein. Beispielsweise kann der Schraubenkopf auf seiner Unterseite eine Kugelform besitzen.

Die Innenkontur der Vertiefung ist im Anlagebereich des zweiten zu verbindenden Bauteils vorzugsweise mathematisch ähnlich zur Außenkontur des Schraubenkopfs, wobei sie um den Betrag der Dicke des Ringvorsprungs größer gewählt sein kann. Es wäre jedoch auch möglich, die Innenkontur des Verbindungsabschnitts exakt komplementär zur Außenkontur des Schraubenkopfs auszubilden, oder aber eine andere, beispielsweise weniger aufwendig herzustellende Kontur, beispielsweise eineeinfache Kegelform, zu wählen.

Es ist aber grundsätzlich vorteilhaft, wenn der Ringvorsprung vollflächig und geschlossen umlaufend sowohl an der Außenkontur des Schraubenkopfes als auch an der Innenkontur des Verbindungsabschnitts anliegt.

Zur Vereinfachung der Baugruppe hat der Verbindungsabschnitt ein Aufnahmegewinde für die Schraube und ist insbesondere als Mutter ausgebildet.

In einer möglichen Ausführungsform wird eine vorgefertigte Mutter in eine Aufnahme im ersten Bauteil eingesetzt und dort fixiert. Hierzu kann die Mutter beispielsweise als Nietmutter, Pressmutter oder Quetschmutter ausgebildet sein.

In einer anderen Ausführungsform sind der Verbindungsabschnitt sowie ein axial nach diesem angeordnetes Gewinde direkt im ersten Bauteil selbst ausgebildet, sodass auf eine zusätzliche Mutter verzichtet werden kann.

Der Umformabschnitt besteht vorzugsweise aus einem Blech, wobei Material und Dicke so zu wählen sind, dass durch den Anpressdruck beim Anziehen der Schraube eine Verformung mit der Ausbildung des Ringvorsprungs und Entstehen des Formschlusses der beiden Bauteile erfolgt. Der Anpressdruck kann z.B. etwa 8 bis 10 kN betragen. Die minimale Vorspannkraft der Schraube sollte dabei signifikant über der zur Umformung notwendigen Last liegen.

Die Erfindung wird nachfolgend anhand eines Ausführungsbeispiels mit Bezug auf die beigefügten Zeichnungen näher beschrieben. In diesen zeigen:
- Figur 1 eine erfindungsgemäße Baugruppe vor dem Anziehen der Schraube im Querschnitt; und
- Figur 2 die erfindungsgemäße Baugruppe nach Figur 1 nach dem Anziehen der Schraube.

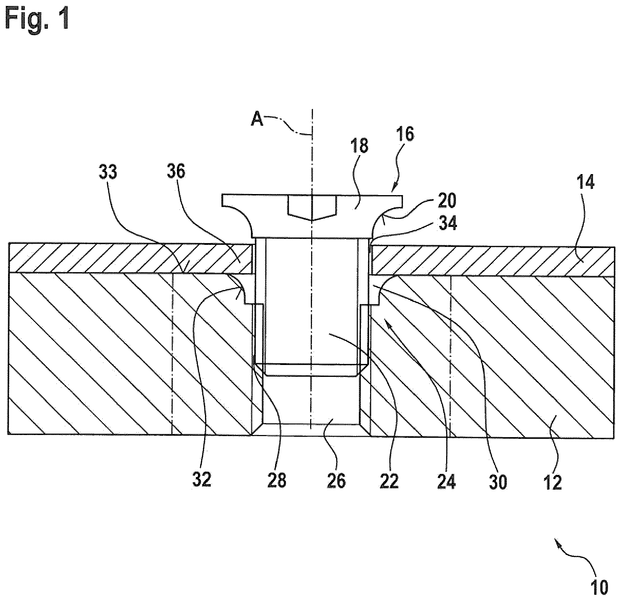

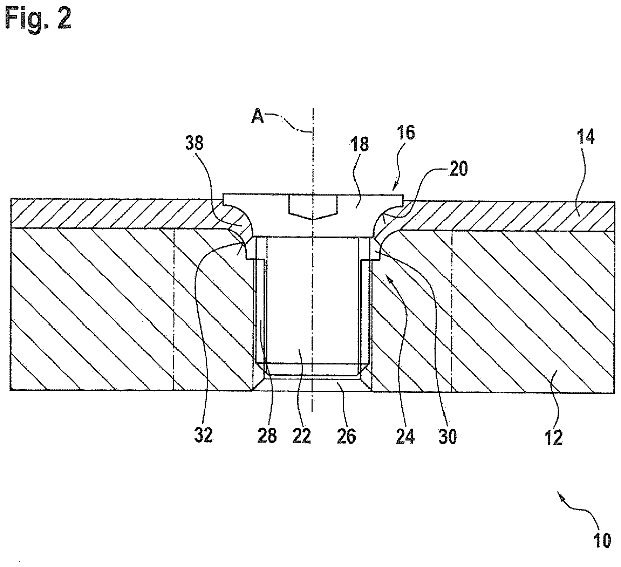

Die beiden Figuren zeigen eine Baugruppe 10 aus einem ersten zu verbindenden Bauteil 12, einem zweiten zu verbindenden Bauteil 14 sowie einer Schraube 16. Figur 1 zeigt die Baugruppe 10 in einem Zustand direkt vor dem Anziehen der Schraube 16, während Figur 2 die Baugruppe 10 in dem Zustand zeigt, in dem die Schraube 16 fest montiert ist.

Das erste zu verbindende Bauteil 12 ist beispielsweise Teil einer Fahrzeugkarosserie, während das zweite zu verbindende Bauteil 14 beispielsweise Teil einer Strebe eines Fahrwerks bildet.

Der Schraubenkopf 18 der Schraube 16 weist an seiner Unterseite eine Außenkontur 20 auf, die sich in Richtung zum Schraubenschaft 22 hin verjüngt.

Im gezeigten Beispiel ist die Außenkontur 20 eine Rotationsfläche mit einer kreisbogenförmigen Erzeugenden, wobei der Kreisbogen nach innen zur Schraubenachse A gekrümmt ist. Die Außenkontur 20 erstreckt sich hier über die gesamte Unterseite des Schraubenkopfes 18. Am Übergang zum Schraubenschaft 22 ist in diesem Beispiel eine Schulter ausgebildet.

Das erste zu verbindende Bauteil 12 weist einen Verbindungsabschnitt 24 auf, der eine Öffnung 26 hat, in der eine Schraubenschaftaufnahme 28 mit einem Gewinde zur Aufnahme des Gewindes der Schraube 16 ausgebildet ist.

In Axialrichtung zum Schraubenkopf 18 hin schließt sich an die Schraubenschaftaufnahme 28 eine Vertiefung 30 an, deren Innenkontur 32 bis zur Oberfläche 33 des ersten zu verbindenden Bauteils 12 reicht und deren Durchmesser sich ausgehend von der Schraubenschaftaufnahme 28 zur Oberfläche 33 hin erweitert.

Im hier gezeigten Beispiel sind die Außenkontur 20 des Schraubenkopfs 18 und die Innenkontur 32 der Vertiefung 30 komplementär zueinander und entsprechen sich in ihrer Form. Es wäre jedoch möglich, unterschiedliche Formen für die Außenkontur 20 und die Innenkontur 32 zu wählen, die vom Fachmann auf den jeweiligen Einsatzzweck abstimmbar sind.

Bei der hier dargestellten Ausführungsform ist die Öffnung 26 mit der Vertiefung 30 und der Schraubenschaftaufnahme 28 mit dem Gewinde direkt in das erste zu verbindende Bauteil 12 eingebracht.

Alternativ könnte im ersten zu verbindenden Bauteil 12 eine Aufnahme vorgesehen sein, in die eine vorgefertigte, separate Mutter eingesetzt ist, welche die Vertiefung 30 und die Schraubenschaftaufnahme 28 aufweist und welche den Verbindungsabschnitt 24 bildet. Dies ist durch die strichpunktierten Linien in Figur 1 angedeutet.

Das zweite zu verbindende Bauteil 14 hat eine Öffnung 34 zum Durchtritt des Schraubenschafts 22, wobei die Öffnung 34 von einem Umformabschnitt 36 umgeben ist. Zumindest der Umformabschnitt 36 besteht aus flächigem, verformbarem Material, beispielsweise einem Blech. Der Durchmesser der Öffnung 34 ist so bemessen, dass die Außenkontur 20 des Schraubenkopfs 18 beim Anziehen der Schraube 16 den Umformabschnitt 36 umfangsmäßig umlaufend erfasst.

Beim Anziehen der Schraube zur Herstellung der Schraubverbindung und zur Verbindung der Bauteile 12, 14 miteinander wird durch den über die Schraube 16 aufgebrachten Anpressdruck der Umformabschnitt 36 des zweiten zu verbindenden Bauteils 14 plastisch verformt. Dabei bildet sich im Umformabschnitt 36 ein umlaufender Ringvorsprung 38 aus, der vollflächig und geschlossen sowohl an der Außenkontur 20 des Schraubenkopfs 18 als auch an der Innenkontur 32 des Verbindungsabschnitts 24 anliegt.

Der Anpressdruck beim Anziehen der Schraube 16 kann beispielsweise etwa 8 bis 10 kN betragen. Auf diesen Anpressdruck sind Material und Stärke des Umformabschnitts 36 so abgestimmt, dass dieser zum Ringvorsprung 38 verformt wird, der sich zwischen den Schraubenkopf 18 und das erste zu verbindende Bauteil 12 legt.

Der Ringvorsprung 38 stellt einen seitlichen und axialen Formschluss zwischen den Bauteilen 12, 14 her, der eine Aufnahme von hohen Querkräften zwischen den Bauteilen 12, 14 erlaubt sowie eine spielfreie Verbindung der Bauteile 12, 14 schafft.

## Patentansprüche

1. Baugruppe zur Verbindung von wenigstens zwei Bauteilen (12, 14) mittels einer Schraubverbindung, mit einer Schraube (16), die einen Schraubenschaft (22) und einen Schraubenkopf (18) mit einer sich in Richtung zum Schraubenschaft (22) verjüngenden Außenkontur (20) aufweist, einem ersten zu verbindenden Bauteil (12), das einen Verbindungsabschnitt (24) mit einer Vertiefung (30) im Bereich des Schraubenkopfes (18) aufweist, die in eine Schraubenschaftaufnahme (28) übergeht, sowie einem zweiten zu verbindenden Bauteil (14), das eine Öffnung (34) zum Durchtritt des Schraubenschafts (22) mit einem die Öffnung (34) umgebenden Umformabschnitt (36) aufweist, wobei der Umformabschnitt (36) beim Anziehen der Schraube (16) vom Schraubenkopf (18) in die Vertiefung (30) gedrückt wird und einen in die Vertiefung (30) ragenden Ringvorsprung (38) ausbildet, durch den ein seitlicher Formschluss zwischen den Bauteilen (12, 14) gebildet ist, **dadurch gekennzeichnet dass** der Verbindungsabschnitt (24) ein Aufnahmegewinde für die Schraube (16) hat und das erste zu verbindende Bauteil (12) ein Karosseriebauteil und das zweite zu verbindende Bauteil (14) Teil einer Strebe eines Fahrwerks ist.

2. Baugruppe nach Anspruch 1, **dadurch gekennzeichnet, dass** die Außenkontur (20) des Schraubenkopfs (18) im Kontaktbereich mit dem zweiten Bauteil (14) wenigstens abschnittsweise trichterförmig und insbesondere kegelförmig oder durch eine Rotationsfläche mit einer gekrümmten Erzeugenden definiert ist.

3. Baugruppe nach Anspruch 2, **dadurch gekennzeichnet, dass** die Erzeugende ein zur Schraubenachse (A) gekrümmter Bogen ist

4. Baugruppe nach einem der vorhergehenden Ansprüche, **dadurch gekennzeichnet dass** der Ringvorsprung (38) vollflächig und geschlossen umlaufend sowohl an der Außenkontur (20) des Schraubenkopfes (18) als auch an einer Innenkontur (32) des Verbindungsabschnitts (24) anliegt

5. Baugruppe nach einem der vorhergehenden Ansprüche, **dadurch gekennzeichnet dass** der Verbindungsabschnitt (24) als Mutter ausgebildet ist

6. Baugruppe nach Anspruch 5, **dadurch gekennzeichnet, dass** die Mutter als vorgefertigtes Teil ausgebildet ist.

7. Baugruppe nach einem der Ansprüche 1 bis 4, **dadurch gekennzeichnet, dass** der Verbindungsabschnitt (24) sowie ein in diesem angeordnetes Gewinde direkt im ersten Bauteil (12) ausgebildet sind.

8. Baugruppe nach einem der vorhergehenden Ansprüche, **dadurch gekennzeichnet, dass** der Umformabschnitt (36) aus einem Blech besteht.

9. Baugruppe nach einem der vorhergehenden Ansprüche, **dadurch gekennzeichnet, dass** das erste und das zweite zu verbindende Bauteil (12, 14) durch die Schraubverbindung insbesondere quer zur Schraubenachse (A) spielfrei gehalten sind.

## Claims

1. An assembly for connecting at least two components (12, 14) by means of a screw connection, with a screw (16) which has a screw shank (22) and a screw head (18) with an outer contour (20) which tapers towards the screw shank (22), a first component (12) which is to be connected which has a connecting portion (24) with an indentation (30) in the region of the screw head (18) which merges into a screw shank receptacle (28), and also a second component (14) which is to be connected which has an opening (34) for the screw shank (22) to pass through with a deformation portion (36) surrounding the opening (34), wherein the deformation portion (36) when the screw (16) is tightened is pressed by the screw head (18) into the indentation (30) and forms an annular projection (38) protruding into the indentation (30), by which projection a lateral positive lock is formed between the components (12, 14), **characterised in that** the connecting portion (24) has a receiving thread for the screw (16) and the first component (12) which is to be connected is a vehicle body component and the second component (14) which is to be connected is part of a strut of an undercarriage.

2. An assembly according to Claim 1, **characterised in that** the outer contour (20) of the screw head (18) in the region of contact with the second component (14) at least in portions is funnel-shaped and especially is conical or is defined by a surface of revolution with a curved generatrix.

3. An assembly according to Claim 2, **characterised in that** the generatrix is an arc which is curved towards the helix axis (A).

4. An assembly according to one of the preceding claims, **characterised in that** the annular projection (38), bears, running over its full surface and in closed manner, both on the outer contour (20) of the screw head (18) and on an inner contour (32) of the connecting portion (24).

5. An assembly according to one of the preceding claims, **characterised in that** the connecting portion (24) is designed as a nut.

6. An assembly according to Claim 5, **characterised in that** the nut is designed as a prefabricated part.

7. An assembly according to one of Claims 1 to 4, **characterised in that** the connecting portion (24) and also a thread arranged therein are designed directly in the first component (12).

8. An assembly according to one of the preceding claims, **characterised in that** the deformation portion (36) comprises a metal sheet.

9. An assembly according to one of the preceding claims, **characterised in that** the first and the second components (12, 14) which are to be connected are kept free from play especially transversely to the helix axis (A) by the screw connection.

## Revendications

1. Module d'assemblage d'au moins deux pièces (12, 14) par une liaison vissée comprenant une vis (16) munie d'une tige (22) et d'une tête (18) ayant un contour externe (20) s'amincissant en direction de la tige (22), une première pièce (12) à assembler qui comporte un segment d'assemblage (24) ayant un renfoncement (30) situé dans la zone de la tête (18) de la vis qui se prolonge par un logement de réception (28) de la tige de la vis ainsi qu'une seconde pièce à assembler (14) qui comporte une ouverture (34) permettant le passage de la tige (22) de la vis ayant un segment de déformation (36) entourant l'ouverture (34), lors du serrage de la vis (16) le segment de déformation (36) étant comprimé par la tête (18) de la vis dans le renfoncement (30) et formant une saillie annulaire (38) pénétrant dans ce renfoncement (30) pour obtenir une liaison par la forme latérale entre les pièces (12, 14),
**caractérisé en ce que**
le segment d'assemblage (24) comporte un filetage de réception de la vis (16) et la première pièce (12) à assembler est un composant de carrosserie tandis que la seconde pièce à assembler (14) est une partie d'un longeron d'un train de roulement.

2. Module conforme à la revendication 1,
**caractérisé en ce que**
le contour externe (20) de la tête de la vis (18) est, dans la zone de contact avec la seconde pièce (14), au moins par segments en forme d'entonnoir, et en particulier en forme de cône ou est défini par une surface de révolution ayant une génératrice courbe.

3. Module conforme à la revendication 2,
**caractérisé en ce que**
la génératrice est un arc courbé vers l'axe (A) de la vis.

4. Module conforme à l'une des revendications précédentes,
**caractérisé en ce que**
la saillie annulaire (38) s'applique en s'étendant circonférentiellement par une surface pleine et fermée, sur le contour externe (20) de la tête (18) de la vis et également sur le contour interne (32) du segment d'assemblage (24).

5. Module conforme à l'une des revendications précédentes,
**caractérisé en ce que**
le segment d'assemblage (24) est réalisé sous la forme d'un écrou.

6. Module conforme à la revendication 5,
**caractérisé en ce que**
l'écrou est réalisé sous la forme d'une pièce préfabriquée.

7. Module conforme à l'une des revendications 1 à 4,
**caractérisé en ce que**
le segment d'assemblage (24) ainsi qu'un filetage situé dans celui-ci sont directement réalisés sur la première pièce (12).

8. Module conforme à l'une des revendications précédentes,
**caractérisé en ce que**
le segment de déformation (36) est constitué par une tôle.

9. Module conforme à l'une des revendications précédentes,
**caractérisé en ce que**
la première pièce à assembler et la seconde pièce à assembler (12, 14) sont maintenues sans jeu par la liaison vissée, en particulier transversalement à l'axe (A) de la vis.
